# FASCICULE DE BREVET EUROPEEN

(11) **EP 3 673 529 B1**
(45) Date de publication et mention de la délivrance du brevet: **30.03.2022**
(21) Numéro de dépôt: 18800719.9
(22) Date de dépôt: 23.10.2018
(51) Int. Cl.: H01M 8/12, H01M 8/2425, H01M 8/248, H01M 8/0271, H01M 8/04014, H01M 8/04029, H01M 8/04007, H01M 8/2432, H01M 8/124

(54) **ENSEMBLE D'UN EMPILEMENT À OXYDES SOLIDES DE TYPE SOEC/SOFC ET D'UN SYSTÈME DE SERRAGE INTÉGRANT UN SYSTÈME D'ÉCHANGE THERMIQUE**
STAPELANORDNUNG MIT FESTOXIDEN VOM TYP SOEC/SOFC UND SPANNVORRICHTUNG MIT EINGEBAUTEM WÄRMETAUSCHER
STACK ASSEMBLY OF SOLID OXIDE CELLS SOEC/SOFC AND TIGHTENING SYSTEM INCLUDING A HEAT EXCHANGE SYSTEM

(30) Priorité: 26.10.2017 FR 1760106
(43) Date de publication de la demande: 01.07.2020
(73) Titulaire: Commissariat à l'Energie Atomique et aux Energies Alternatives, 75015 Paris (FR)
(72) Inventeur: ROUX, Guilhem, 38120 Saint-Egreve (FR); BERNARD, Charlotte, 74130 Contamine Sur Arve (FR); PLANQUE, Michel, 38180 Seyssins (FR)
(74) Mandataire: Brevalex
(86) Numéro de dépôt international: PCT/FR2018/052629
(87) Numéro de publication internationale: WO 2019/081844

(56) Documents cités:
- EP-A1- 2 980 904
- EP-A1- 3 082 188
- WO-A1-2012/131267
- WO-A2-2012/136662

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comprenant un empilement à oxydes solides de type SOEC/SOFC et un système de serrage de l'empilement avec un système intégré d'échange thermique, ainsi qu'un procédé de fabrication d'un tel système d'échange thermique.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (O₂), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

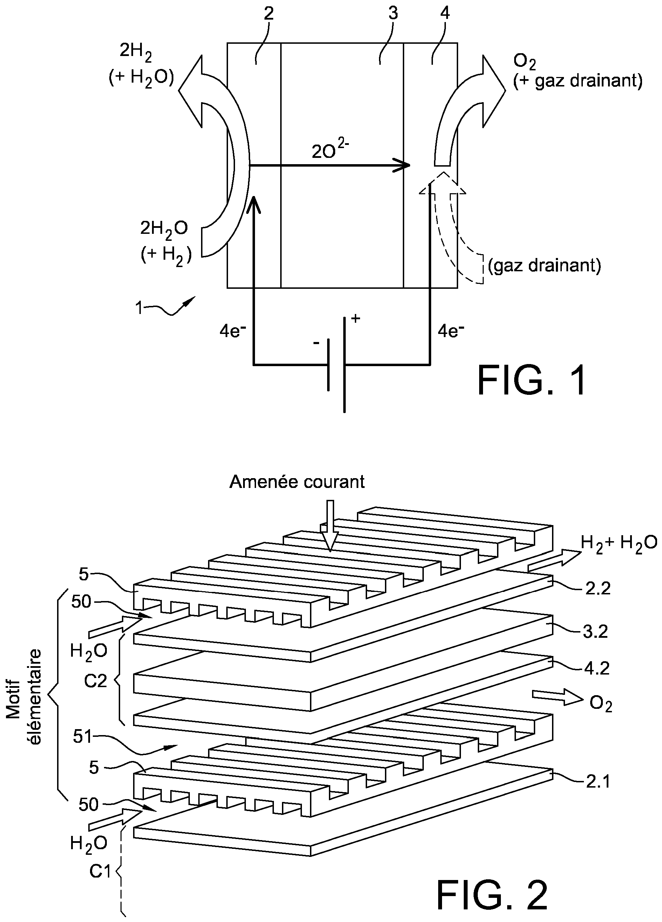

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

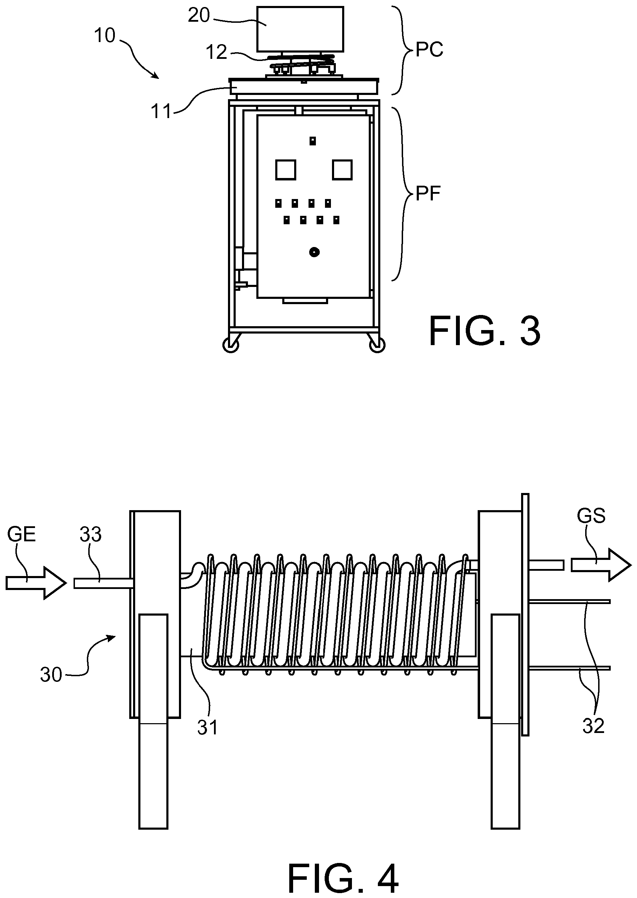

Les gaz entrants et sortants dans un empilement d'électrolyse à haute température (SOEC) ou de pile à combustible (SOFC) fonctionnant à haute température peuvent être gérés par le biais de dispositifs appropriés tel qu'un four comme illustré en référence à la figure 3.

Le four 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

De façon classique, il existe deux techniques principales pour réaliser la surchauffe des gaz d'entrée dans un empilement d'électrolyse à haute température (SOEC) ou de pile à combustible (SOFC).

Tout d'abord, comme représenté schématiquement par le tube en boucle 12 sur la figure 3, il est possible d'utiliser des longueurs de tube enroulées au droit des résistances chauffantes d'un four 10 dans la partie chaude PC. Les gaz auront été préalablement portés à une température d'environ 500°C en sortie d'échangeurs si cela est prévu par le système. Alors, ce ou ces tubes de surchauffe 12 des gaz permettent de gagner environ 300°C de plus en utilisant le rayonnement thermique des résistances du four 10 et du stack 20, avant d'être introduits dans le stack 20.

Par ailleurs, il est également connu de faire passer les gaz par des chauffeurs électriques 30 tels que celui représenté sur la figure 4. Un tel chauffeur électrique 30 s'apparente à un ensemble massif comprenant une masse inertielle 31 en acier, une résistance chauffante 32 et un tube de conduite des gaz 33 enroulé sur la masse inertielle 31. Sur la figure 4 sont également représentés les gaz entrants GE et les gaz sortants GS. Ces chauffeurs électriques 30 sont chargés de porter les gaz entrants GE de 20°C à une température d'environ 800°C avant l'introduction des gaz sortants GS dans le stack 20.

Le bon fonctionnement du système dans les deux cas nécessite une température très précise en entrée de l'empilement ou stack 20 afin de garantir le bon fonctionnement de l'ensemble.

La première technique qui, après passage des gaz dans les échangeurs, récupère le rayonnement des résistances du four pour monter les gaz à la bonne température en entrée de stack oblige donc à faire des enroulements d'une longueur d'environ 3 m (exemple donné pour un stack de 25 cellules de 10 cm x 10 cm de surface active), ce qui entraîne l'inconvénient de rajouter de la complexité dans les cintrages pour faire en sorte que les tubes arrivent aux bons endroits dans un espace confiné, et ce qui augmente de façon importante la taille du four. La mise en œuvre est donc compliquée car il faut être précis et car les tubes, typiquement de diamètre 10/12 en inox 316L ou Inconel 600, sont très rigides. Par ailleurs, le fait de faire des boucles de surchauffe de gaz prend beaucoup de place, et interfère immanquablement avec les amenées de courant, les passages de thermocouples, et les tubes de sortie de l'électrolyseur, ce qui amène souvent à raccourcir ces lignes du fait du manque de place dans le four. De plus, il faut refaire le même travail de cintrage à chaque nouveau stack, car le démontage du raccordement de ces boucles est destructif.

En règle générale, pour obtenir la bonne température en entrée de stack 20, et pour un diamètre intérieur de tube 12 d'environ 10 mm, il faut une longueur développée d'environ 3 m par lignes de gaz en entrée, typiquement H₂O et N₂O₂, avec un débit compris entre 5 et 15 Nm³/s. Cette longueur d'environ 3 m, qui permet d'atteindre en sortie la température de régulation du four, fonctionne aussi bien en mode d'empilement d'électrolyse à haute température (SOEC) ou de pile à combustible (SOFC), et garantit la bonne température en entrée de stack.

En outre, il est nécessaire de faire un traitement coûteux et long de ces lignes de gaz par dépôt d'alumine afin d'éviter les pollutions dues aux phénomènes d'oxydation lorsque de l'inox 316L est utilisé. Les particules entraînées par le flux gazeux (chrome, vanadium, ...) peuvent venir se fixer sur cette cellule, et ainsi diminuer les performances de l'empilement à oxydes solides de type SOEC/SOFC.

Par ailleurs, la deuxième technique nécessite un surchauffeur 30 par entrées de gaz. Or, ce sont des ensembles massifs qui prennent beaucoup de place alors que l'on tend de plus en plus à aller vers des systèmes compacts. Il y a donc autant de surchauffeurs électriques que d'entrées de gaz, ce qui, dans le cadre de l'intégration des éléments périphériques dans un four, pose de sérieux problèmes. Il y a donc une nécessité de placer la sortie de gaz de ce chauffeur électrique 30 au plus proche des entrées du stack afin d'éviter un traçage de la ligne par bras chauffant.

En outre, on connaît des demandes de brevet européen EP 3 082 188 A1 et EP 2 980 904 A1 des exemples de piles à combustible avec des gaz circulant dans des tiges de serrage creuses.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception d'un ensemble intégré empilement (ou stack)/système d'échange thermique, notamment de surchauffe ou de préchauffe de gaz, pour un empilement d'électrolyse à haute température (SOEC) ou de pile à combustible (SOFC), en limitant, voire en supprimant, le besoin en pièces extérieures. Ce système doit donc pouvoir être intégré à l'empilement présentant un caractère de type « Plug & Play » (PnP) (système auto-serrant), comme décrit dans la demande de brevet français FR 3 045 215 A1.

L'invention a ainsi pour objet, selon l'un de ses aspects, un ensemble selon la revendication 1.

Ainsi, de façon avantageuse, l'invention peut permettre d'utiliser les tiges de serrage, en les rendant creuses, pour former des échangeurs thermiques permettant de surchauffer ou préchauffer un ou des fluides. Ce ou ces fluides peuvent être liquides ou gazeux, étant préférentiellement gazeux.

Grâce à l'invention, il est possible de s'affranchir des enroulements tubulaires compliqués à mettre en œuvre, tels que décrits précédemment en lien avec la première technique de surchauffe des gaz. On obtient donc un gain significatif en termes d'encombrement. L'invention permet l'intégration du principe de surchauffe ou préchauffe dans le système de serrage sans rajout de pièce extérieure, ce qui permet de limiter la taille du four. De plus, l'efficacité thermique peut être augmentée par l'utilisation de moyens de vrillage (« swirl » en anglais).

De plus, le système d'échange thermique faisant partie du système de serrage, il est possible d'éviter de refaire les enroulements tubulaires à chaque nouveau stack alors que le système de boucles tubulaires selon la première technique de l'art antérieur n'est pas récupérable. Avantageusement, le système d'échange thermique peut être réutilisé pour d'autres empilements.

L'ensemble selon l'invention peut en outre comporter l'une ou plusieurs des caractéristiques suivantes prises isolément ou suivant toutes combinaisons techniques possibles.

Au niveau de chacune des extrémités d'entrée et de sortie de chaque tige de serrage, le système de serrage peut comporter un tube de transmission d'effort, disposé autour de l'extrémité correspondante de la tige de serrage, et des moyens de serrage, notamment une rondelle de serrage, le tube de transmission d'effort étant positionné entre la rondelle de serrage et la plaque de serrage correspondante. Cela permet de pouvoir déporter le serrage en zone froide. Dans ce cas, cela ne peut jouer que le rôle de préchauffage des gaz car il faut sortir du four et re-rentrer. On peut également envisager d'utiliser ce circuit indépendamment des gaz pour par exemple utiliser l'exothermicité du stack en mode SOFC pour chauffer de l'eau en thermalisant le stack.

En outre, au niveau de chacune des extrémités d'entrée et de sortie de chaque tige de serrage, le système de serrage peut comporter une pièce d'isolation thermique, notamment en céramique, disposée autour de l'extrémité correspondante de la tige de serrage, la pièce d'isolation thermique étant positionnée au contact de la plaque de serrage correspondante.

De façon avantageuse, le système de surchauffe est formé par au moins une tige de serrage creuse par circuit fluidique.

De plus, le système de surchauffe peut être dit de montage simple, comportant un conduit de liaison de montage simple reliant fluidiquement le conduit d'entrée et une extrémité d'une tige de serrage creuse, l'autre extrémité de la tige de serrage creuse étant reliée fluidiquement à un conduit d'arrivée de gaz à surchauffer.

Le système de surchauffe peut encore être dit de montage en série, comportant un ensemble de conduits de montage en série, comprenant un premier conduit de liaison de montage en série, reliant fluidiquement une première extrémité d'une première tige de serrage creuse à une première extrémité d'une deuxième tige de serrage creuse, et un deuxième conduit de liaison de montage en série reliant fluidiquement la deuxième extrémité de la première tige de serrage au conduit d'entrée dans l'empilement, la deuxième extrémité de la deuxième tige de serrage creuse étant reliée fluidiquement à un conduit d'entrée de gaz à surchauffer.

Le système de surchauffe peut encore être dit de montage en parallèle, comportant un ensemble de conduits de montage en parallèle, comprenant un premier conduit de liaison de montage en parallèle, reliant fluidiquement une première extrémité d'une première tige de serrage creuse à une première extrémité d'une deuxième tige de serrage creuse, et un deuxième conduit de liaison de montage en parallèle reliant fluidiquement la deuxième extrémité de la première tige de serrage à la deuxième extrémité de la deuxième tige de serrage creuse, le deuxième conduit de liaison de montage en parallèle étant relié fluidiquement au conduit d'entrée dans l'empilement, notamment par le biais d'un conduit de connexion lui-même relié fluidiquement au conduit d'entrée dans l'empilement, le premier conduit de liaison de montage en parallèle étant relié fluidiquement à un conduit d'entrée de gaz à surchauffer.

Par ailleurs, les tiges de serrage creuses peuvent avantageusement comporter des moyens de vrillage, ou encore « swirl» en anglais, pour augmenter l'échange thermique avec le fluide à surchauffer ou à préchauffer.

La présence de moyens de vrillage dans les tiges de serrage creuses peut permettre d'augmenter l'efficacité d'échange thermique. En effet, la longueur habituelle d'une tige de serrage peut s'avérer être insuffisante pour permettre le surchauffage ou préchauffage d'un fluide, pouvant par exemple correspondre à un passage de 50°C à 800°C pour des gaz à surchauffer.

Les moyens de vrillage peuvent se présenter sous la forme de rubans torsadés, longs, insérés dans les tiges de serrage creuses, et possèdent l'avantage d'être simples à mettre en place. Ils permettent d'augmenter, pour un même débit, le temps de séjour du fluide pour une longueur donnée, tout en limitant l'augmentation de perte de charge, ce qui est tout particulièrement souhaitable.

En outre, le système de serrage peut comporter, au niveau de chaque extrémité d'une tige de serrage creuse, des moyens de serrage, notamment une rondelle de serrage, au contact d'une plaque de serrage.

De plus, les connexions fluidiques entre conduits fluidiques et/ou entre conduits fluidiques et tiges de serrage creuses, peuvent être réalisées par le biais d'un ou plusieurs raccords démontables et étanches.

De façon avantageuse, les extrémités des tiges de serrage sont filetées. Il peut donc être possible d'y fixer des raccords démontables et étanches munis d'un filetage.

Le raccord démontable et étanche peut notamment être formé par un système de couplage étanche à haute température, comportant :
- une embase creuse au moins partiellement filetée sur sa surface extérieure dite embase filetée, destinée à être fixée sur un premier conduit fluidique ou une tige de serrage creuse, l'embase filetée comportant un orifice de mise en communication fluidique avec le premier conduit fluidique ou la tige de serrage,
- une embase creuse de surface extérieure au moins partiellement lisse dite embase lisse, destinée à être fixée sur un deuxième conduit fluidique ou une tige de serrage creuse, l'embase lisse comportant un orifice de mise en communication fluidique avec le deuxième conduit fluidique ou la tige de serrage creuse, l'embase lisse et l'embase filetée comportant chacune un orifice pour leur mise en communication fluidique entre elles,
- un écrou fileté, apte à coopérer avec l'embase filetée pour former un système vis/écrou et apte à coulisser par rapport à l'embase lisse, l'écrou fileté comprenant, sur sa surface intérieure, une première portion filetée coopérant avec le filetage de l'embase filetée et une deuxième portion lisse en contact coulissant sur la surface extérieure lisse de l'embase lisse.

Un tel raccord démontable et étanche est en particulier tel que décrit dans la demande de brevet français n°17 50009.

De façon préférentielle, la section utile des tiges de serrage creuses est suffisante pour résister au fluage à haute température pouvant être induit par un serrage à froid de l'empilement.

Par ailleurs, l'invention a également pour objet, selon un autre de ses aspects, un procédé de fabrication d'au moins un système d'échange thermique, notamment un système de surchauffe de gaz en entrée d'un empilement à oxydes solides de type SOEC/SOFC ou un système de préchauffe d'un fluide caloporteur, d'un ensemble tel que défini précédemment, caractérisé en ce qu'il comporte l'étape consistant à former plusieurs tiges de serrage creuses et à relier fluidiquement un ou plusieurs conduits fluidiques avec les tiges de serrage creuses de sorte à permettre une circulation d'un fluide à l'intérieur des tiges de serrage creuses.

L'ensemble et le procédé de fabrication selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 est une vue schématique montrant le principe de fonctionnement d'un électrolyseur à oxydes solides à haute température (SOEC),
- la figure 2 est une vue schématique éclatée d'une partie d'un électrolyseur à oxydes solides à haute température (SOEC) comprenant des interconnecteurs selon l'art antérieur,
- la figure 3 illustre le principe de l'architecture d'un four sur lequel un empilement d'électrolyse à haute température (SOEC) ou de pile à combustible (SOFC) fonctionnant à haute température est placé,
- la figure 4 illustre le principe d'un chauffeur électrique de gaz selon l'art antérieur,
- la figure 5 représente, en perspective, un exemple d'un ensemble conforme à l'invention comprenant un empilement à oxydes solides de type SOEC/SOFC et un système de serrage de l'empilement, pouvant comporter un ou plusieurs des systèmes d'échange thermique tels que représentés en référence aux figures 6 à 10,
- les figures 6 à 10 illustrent partiellement, schématiquement et en coupe, des exemples de systèmes d'échange thermique selon l'invention pouvant être utilisés dans un ensemble tel que celui représenté à la figure 5, et
- la figure 11 illustre, partiellement en coupe et en perspective, un exemple de raccord démontable et étanche sous forme d'un système de couplage étanche à haute température pour un ensemble conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 4 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

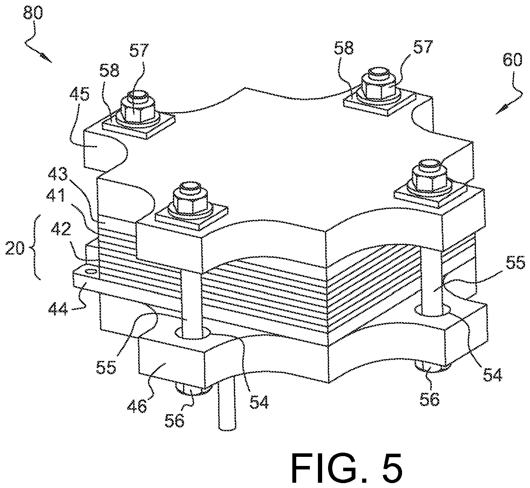

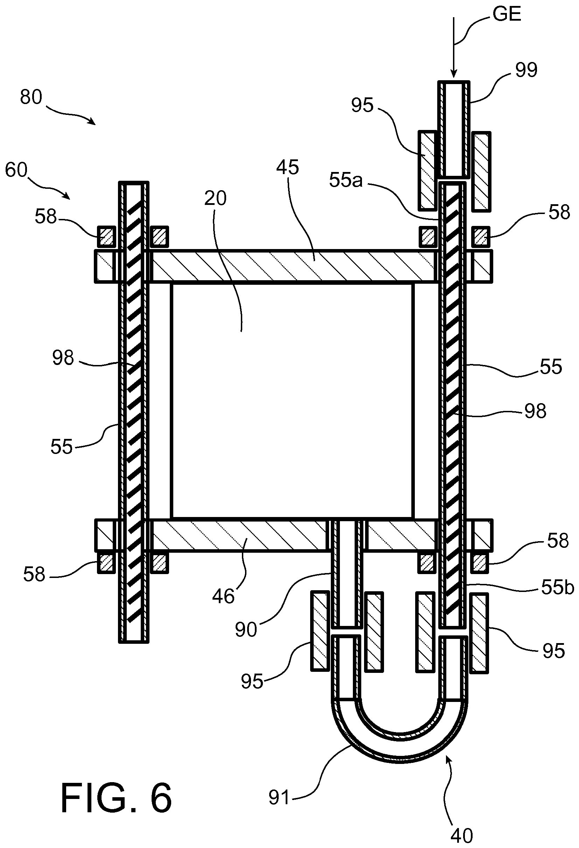

En référence à la figure 5, on a illustré un exemple d'ensemble 80 comprenant un empilement 20 à oxydes solides de type SOEC/SOFC et un système de serrage 60, cet ensemble 80 pouvant comprendre l'un ou plusieurs des systèmes d'échange thermique 40 décrits par la suite en référence aux figures 6 à 10.

De façon avantageuse, l'ensemble 80 selon l'invention présente une structure semblable à celle de l'ensemble décrit dans la demande de brevet français FR 3 045 215 A1, hormis la présence ici d'un système d'échange thermique, c'est-à-dire que l'empilement 20 présente un caractère de type « Plug & Play » (PnP).

Aussi, de façon commune aux différents modes de réalisation de l'invention décrits par la suite, et comme visible sur la figure 5, l'ensemble 80 comporte un empilement 20 à oxydes solides de type SOEC/SOFC fonctionnant à haute température.

Cet empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. Cet ensemble de cellules électrochimiques 41 et d'interconnecteurs intermédiaires 42 peut également être désigné par « stack ».

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Par ailleurs, l'ensemble 80 comporte aussi un système de serrage 60 de l'empilement 20 à oxydes solides de type SOEC/SOFC, comportant une plaque de serrage supérieure 45 et une plaque de serrage inférieure 46, entre lesquelles l'empilement 20 à oxydes solides de type SOEC/SOFC est enserré.

Chaque plaque de serrage 45, 46 du système de serrage 60 comporte quatre orifices de serrage 54.

De plus, le système de serrage 60 comporte en outre quatre tiges de serrage 55, ou tirants, s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46.

Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46.

Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

Conformément à l'invention, l'ensemble 80 comporte au moins un système d'échange thermique 40, par exemple tels que ceux décrits en référence aux figures 6 à 10 mais non visible sur la figure 5, formé au moins en partie par au moins une tige de serrage 55 creuse du système de serrage 60 à l'intérieur de laquelle circule un fluide à surchauffer ou à préchauffer.

Aussi, différentes possibilités de système d'échange thermique 40 vont maintenant être décrites en référence aux figures 6 à 10.

Tout d'abord, en référence aux figures 6, 7 et 8, le système d'échange thermique 40 peut être un système de surchauffe 40 des gaz en entrée de l'empilement 20 à oxydes solides de type SOEC/SOFC.

Il peut ainsi être formé au moins en partie par au moins une tige de serrage 55 creuse du système de serrage 60 à l'intérieur de laquelle circule les gaz à surchauffer GE, l'ensemble 80 comportant par ailleurs un conduit d'entrée 90 dans l'empilement 20 relié fluidiquement à au moins une tige de serrage 55 creuse. Avantageusement, le système de surchauffe 40 est formé par au moins deux tiges de serrage creuses 55, soit au moins une tige de serrage creuse 55 par circuit fluidique.

En référence à la figure 6, le système de surchauffe 40 peut être de montage simple. Ainsi, il comporte un conduit de liaison de montage simple 91 reliant fluidiquement le conduit d'entrée 90 dans l'empilement 20 et une extrémité 55b d'une tige de serrage creuse 55, l'autre extrémité 55a de la tige de serrage creuse 55 étant reliée fluidiquement à un conduit d'arrivée 99 de gaz à surchauffer GE.

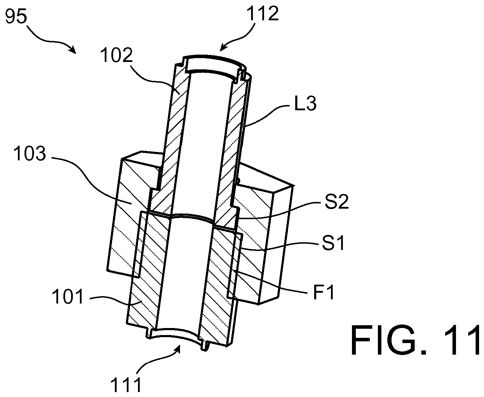

Comme visible sur la figure 6, le conduit de liaison de montage simple 91 peut présenter une forme coudée. De plus, la connexion entre le conduit d'entrée 90 et le conduit de liaison de montage simple 91, de même qu'entre le conduit de liaison de montage simple 91 et la tige de serrage creuse 55, de même encore qu'entre la tige de serrage creuse 55 et le conduit d'arrivée 99 de gaz à surchauffer GE, peut se faire par le biais d'un raccord démontable et étanche 95, comme il sera décrit par la suite, notamment en référence à la figure 11.

En outre, les tiges de serrage 55 peuvent être fixées en partie aux plaques de serrage supérieure 45 et inférieure 46 par le biais de moyens de serrage 58 sous la forme de rondelles de serrage 58.

Dans l'exemple de la figure 6, le système de surchauffe 40 de montage simple n'utilise qu'une seule tige de serrage creuse 55 par gaz, ce qui généralement conduit donc à utiliser deux tiges de serrage creuses, une pour chaque circuit fluidique.

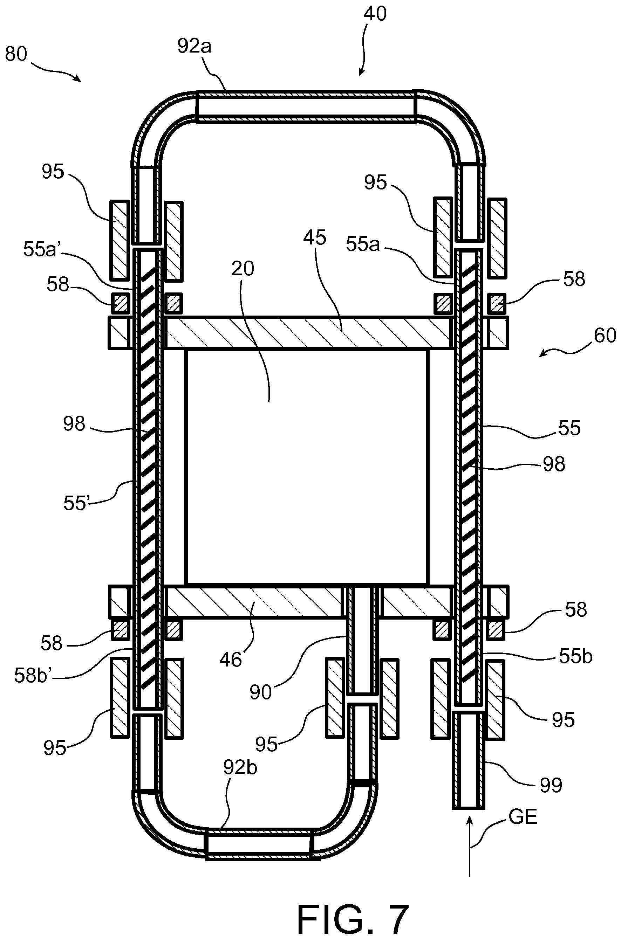

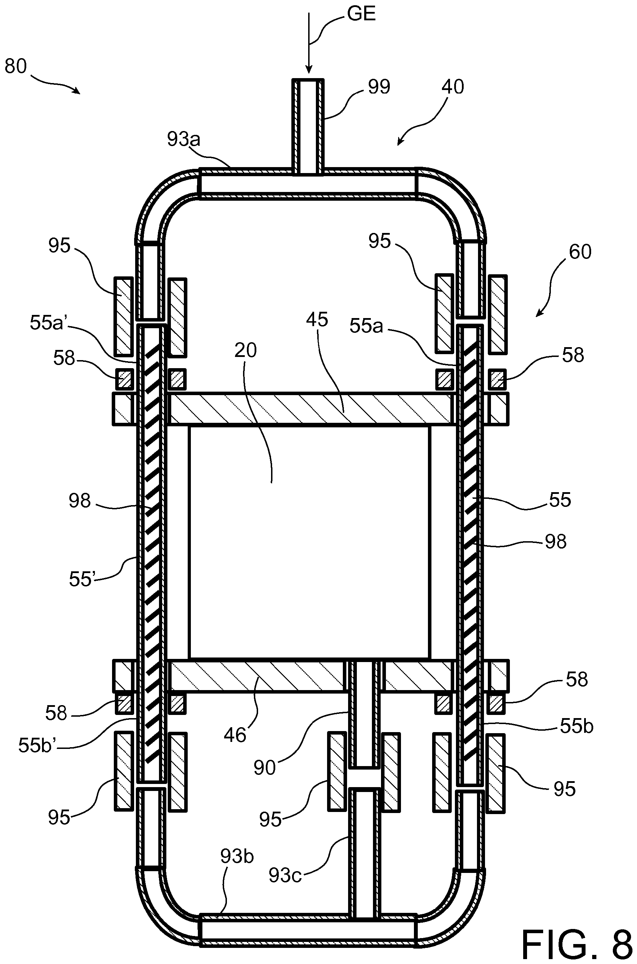

Toutefois, afin d'augmenter la surchauffe des gaz, au moins deux tiges de serrage creuses 55, 55' peuvent être utilisées, comme décrit par la suite en référence aux figures 7 et 8. Plus précisément, la figure 7 permet d'illustrer le cas d'un montage en série et la figure 8 permet d'illustrer le cas d'un montage en parallèle.

Ainsi, en référence à la figure 7, le système de surchauffe 40 peut être de montage en série. Il comporte alors un ensemble de conduits de montage en série 92a et 92b, qui comprend un premier conduit de liaison de montage en série 92a, reliant fluidiquement une première extrémité 55a' d'une première tige de serrage creuse 55' à une première extrémité 55a d'une deuxième tige de serrage creuse 55, et un deuxième conduit de liaison de montage en série 92b reliant fluidiquement la deuxième extrémité 55b' de la première tige de serrage 55' au conduit d'entrée 90 dans l'empilement 20. De plus, la deuxième extrémité 55b de la deuxième tige de serrage creuse 55 est reliée fluidiquement à un conduit d'entrée 99 de gaz à surchauffer GE.

Comme visible sur la figure 7, le premier conduit de liaison de montage en série 92a et le deuxième conduit de liaison de montage en série 92b peuvent présenter une forme coudée. De plus, la connexion entre le conduit d'entrée 90 et le deuxième conduit de liaison de montage en série 92b, de même qu'entre le deuxième conduit de liaison de montage en série 92b et la première tige de serrage creuse 55', de même encore qu'entre la première tige de serrage creuse 55' et le premier conduit de liaison de montage en série 92a, de même également qu'entre le premier conduit de liaison de montage en série 92a et la deuxième tige de serrage creuse 55, de même enfin qu'entre la deuxième tige de serrage creuse 55 et le conduit d'arrivée 99 de gaz à surchauffer GE, peut se faire par le biais d'un raccord démontable et étanche 95, comme il sera décrit par la suite, notamment en référence à la figure 11.

En outre, les tiges de serrage 55 peuvent être fixées en partie aux plaques de serrage supérieure 45 et inférieure 46 par le biais de moyens de serrage 58 sous la forme de rondelles de serrage 58.

Toutefois, l'utilisation d'une seule tige de serrage creuse 5 pour le montage simple ou de deux tiges de serrage creuses 55, 55' pour le montage en série peut influencer la thermique de l'empilement 20. En effet, le passage du gaz dans les tiges de serrage modifie localement les températures, ce qui peut entraîner un risque de gradients de température dans le plan de l'empilement 20. Aussi, il peut être possible d'utiliser deux tiges de serrage creuses 55, 55' en parallèle de sorte à moins influencer la thermique du stack 20.

Ainsi, en référence à la figure 8, le système de surchauffe 40 peut être de montage en parallèle. Il comporte un ensemble de conduits de montage en parallèle 93a, 93b et 93c, qui comprend un premier conduit de liaison de montage en parallèle 93a, reliant fluidiquement une première extrémité 55a' d'une première tige de serrage creuse 55' à une première extrémité 55a d'une deuxième tige de serrage creuse 55, et un deuxième conduit de liaison de montage en parallèle 93b reliant fluidiquement la deuxième extrémité 55b' de la première tige de serrage 55' à la deuxième extrémité 55b de la deuxième tige de serrage creuse 55. De plus, le deuxième conduit de liaison de montage en parallèle 93b est relié fluidiquement au conduit d'entrée 90 dans l'empilement 20 par le biais d'un conduit de connexion 93c lui-même relié fluidiquement au conduit d'entrée 90 dans l'empilement 20. En outre, le premier conduit de liaison de montage en parallèle 93a est relié fluidiquement à un conduit d'entrée 99 de gaz à surchauffer GE.

Comme visible sur la figure 8, le premier conduit de liaison de montage en parallèle 93a et le deuxième conduit de liaison de montage en parallèle 93b peuvent présenter une forme coudée. De plus, la connexion entre le conduit d'entrée 90 et le conduit de connexion 93c, de même qu'entre le deuxième conduit de liaison de montage en parallèle 93b et la première tige de serrage creuse 55', de même encore qu'entre la première tige de serrage creuse 55' et le premier conduit de liaison de montage en parallèle 93a, de même également qu'entre le premier conduit de liaison de montage en parallèle 93a et la deuxième tige de serrage creuse 55, de même enfin qu'entre la deuxième tige de serrage creuse 55 et le deuxième conduit de liaison de montage en parallèle 93b, peut se faire par le biais d'un raccord démontable et étanche 95, comme il sera décrit par la suite, notamment en référence à la figure 11. Le conduit d'entrée 99 peut quant à lui être directement formé sur le premier conduit de liaison de montage en parallèle 93a.

Chacun des systèmes d'échange thermique 40 décrits précédemment en référence aux figures 6 à 8 peut permettre de réaliser un chauffage des gaz en entrée de l'empilement 20 de type SOEC/SOFC associé à un four 10, comme décrit précédemment en référence à la figure 3.

Par ailleurs, de façon avantageuse, la ou les tiges de serrage creuses 55 peuvent être utilisées pour préchauffer un fluide caloporteur, liquide ou gazeux, destiné à une autre fonction. Par la même également, la circulation du fluide caloporteur dans la ou les tiges de serrage 55 peut être utilisée pour leur refroidissement afin de consolider l'étanchéité.

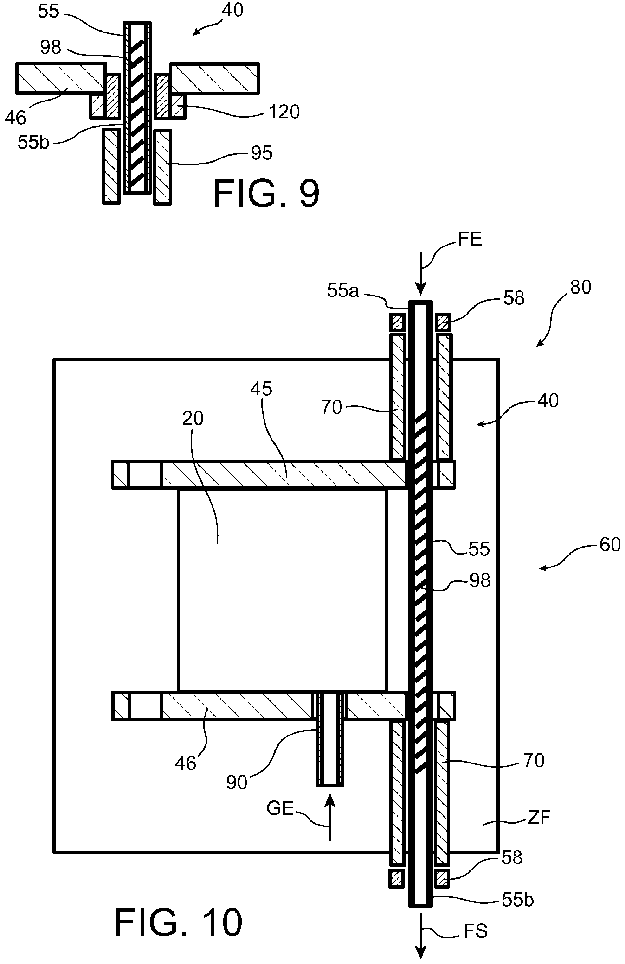

Ainsi, en référence à la figure 10, une tige de serrage creuse 55 comporte une extrémité d'entrée 55a d'un fluide caloporteur à préchauffer FE et une extrémité de sortie 55b du fluide caloporteur préchauffé FS. Le passage du fluide caloporteur dans la tige de serrage creuse 55 va entraîner le réchauffement du fluide et le refroidissement de la tige de serrage creuse 55.

Au niveau de chacune des extrémités d'entrée 55a et de sortie 55b de la tige de serrage 55, le système de serrage 60 comporte un tube de transmission d'effort 70, disposé autour de l'extrémité 55a ou 55b correspondante de la tige de serrage 55, et des moyens de serrage sous la forme d'une rondelle de serrage 58, le tube de transmission d'effort 70 étant positionné entre la rondelle de serrage 58 et la plaque de serrage 45 ou 46 correspondante.

Lorsque le fluide caloporteur n'est pas lié à l'utilisation de l'empilement 20, le débit de fluide caloporteur peut être régulé pour maintenir une température constante de la tige de serrage 55 en fonction de l'exothermicité de l'empilement 20.

Par ailleurs, le principe de l'ensemble 80 avec son empilement 20 à oxydes solides de type SOEC/SOFC prévoit de réaliser le serrage dans la zone chaude. Or, le passage d'un fluide caloporteur froid dans la tige de serrage 55 peut permettre de diminuer la température et de pouvoir ainsi déporter le serrage hors de la zone froide ZF, comme illustré sur la figure 10.

Par ailleurs, comme illustré sur la figure 9, au niveau de chacune des extrémités d'entrée 55a et de sortie 55b de la tige de serrage 55, le système de serrage 60 peut comporter une pièce d'isolation thermique 120, notamment en céramique, disposée autour de l'extrémité 55a ou 55b correspondante de la tige de serrage 55. Cette pièce d'isolation thermique 120 est positionnée au contact de la plaque de serrage 45 ou 46 correspondante.

Le principe de l'invention est ainsi avantageux pour permettre le préchauffage d'un fluide caloporteur, notamment de gaz. En effet, en mode SOEC ou SOFC au-dessus de l'autotherme, le stack 20 est exothermique, il produit de la chaleur, et les calories doivent être évacuées afin de limiter l'élévation de température du stack 20. Bien qu'une partie de ces calories soit évacuée par le biais des pertes thermiques de la zone chaude, le principe de l'invention peut permettre d'évacuer une grande partie de ces calories en préchauffant un fluide caloporteur, notamment un gaz, rentrant dans une tige de serrage creuse 55 bien plus froid que la température de fonctionnement, inférieure à 200°C typiquement.

Cela aura également pour conséquence de diminuer la température des tiges de serrage 55, et donc d'augmenter leur risque de fluage, et donc encore d'augmenter la fiabilité du système de serrage 60. Cela peut donc permettre de diminuer la section des tiges de serrage 55. Toutefois, dans le cas où le fluide caloporteur aurait tendance à trop refroidir l'empilement 20, la pièce d'isolation thermique 120, réalisée préférentiellement en céramique, peut être intercalée entre une plaque de serrage 45, 46 du système de serrage 60 et par exemple un raccord démontable et étanche 95, comme visible sur la figure 9.

En outre, comme visible sur l'ensemble des figures 6, 7, 8 et 10, la ou les tiges de serrage creuses 55 peuvent avantageusement comporter des moyens de vrillage 98, ou encore « swirl» en anglais, pour augmenter l'échange thermique avec le fluide à surchauffer ou à préchauffer.

La présence de moyens de vrillage 98 dans les tiges de serrage creuses 55 peut permettre d'augmenter l'efficacité d'échange thermique. En effet, la longueur habituelle d'une tige de serrage 55 peut s'avérer être insuffisante pour permettre le surchauffage ou préchauffage d'un fluide, pouvant par exemple correspondre à un passage de 50°C à 800°C pour des gaz à surchauffer.

Les moyens de vrillage 98 peuvent se présenter sous la forme de rubans torsadés, longs, insérés dans les tiges de serrage creuses 55, et possèdent l'avantage d'être simples à mettre en place. Ils permettent d'augmenter, pour un même débit, le temps de séjour du fluide pour une longueur donnée, tout en limitant l'augmentation de perte de charge, ce qui est tout particulièrement souhaitable.

Par ailleurs, la figure 11 illustre, partiellement en coupe et en perspective, un exemple de raccord démontable et étanche 95 sous forme d'un système de couplage étanche à haute température pour un ensemble 80 conforme à l'invention. Ce raccord 95 peut permettre d'assurer les connexions fluidiques entre les conduits fluidiques 91, 92a, 92b, 93a, 93b, 93c, 90 ou 99, ou encore entre ces conduits fluidiques 91, 92a, 92b, 93a, 93b, 93c, 90 ou 99 et les tiges de serrage creuses 55, 55'. Un tel raccord 95 est en particulier décrit dans la demande de brevet français n°17 50009.

Avantageusement, ce raccord 95 comporte ainsi :
- une embase 101 creuse au moins partiellement filetée F1 sur sa surface extérieure dite embase filetée, destinée à être fixée sur un conduit fluidique 91, 92a, 92b, 93a, 93b, 93c, 90, 99 ou une tige de serrage creuses 55, 55', cette embase filetée 101 comportant un orifice 111 de mise en communication fluidique avec le ce conduit fluidique ou cette tige de serrage creuse,
- une embase 102 creuse de surface extérieure au moins partiellement lisse L3 dite embase lisse, destinée à être fixée sur un autre conduit fluidique 91, 92a, 92b, 93a, 93b, 93c, 90, 99 ou une autre tige de serrage creuses 55, 55', cette embase lisse 102 comportant un orifice 112 de mise en communication fluidique avec ce conduit fluidique ou cette tige de serrage creuse, l'embase lisse 102 et l'embase filetée 101 comportant chacune un orifice 111, 112 pour leur mise en communication fluidique entre elles,
- un écrou fileté 103, apte à coopérer avec l'embase filetée 101 pour former un système vis/écrou et apte à coulisser par rapport à l'embase lisse 102, l'écrou fileté 103 comprenant, sur sa surface intérieure, une première portion filetée S1 coopérant avec le filetage F1 de l'embase filetée 101 et une deuxième portion lisse S2 en contact coulissant sur la surface extérieure lisse L3 de l'embase lisse 102.

Bien entendu, l'invention n'est pas limitée aux exemples de réalisation qui viennent d'être décrits. Diverses modifications peuvent y être apportées par l'homme du métier.

## Revendications

1. Ensemble (80), comportant :
- un empilement (20) à oxydes solides de type SOEC/SOFC fonctionnant à haute température, comportant :
- une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes,
- une plaque terminale supérieure (43) et une plaque terminale inférieure (44), entre lesquelles la pluralité de cellules électrochimiques (41) et la pluralité d'interconnecteurs intermédiaires (42) sont enserrées,
- un système de serrage (60) de l'empilement (20) à oxydes solides de type SOEC/SOFC, comportant une plaque de serrage supérieure (45) et une plaque de serrage inférieure (46), entre lesquelles l'empilement (20) à oxydes solides de type SOEC/SOFC est enserré, chaque plaque de serrage (45, 46) comportant au moins deux orifices de serrage (54), le système de serrage (60) comportant en outre :
- au moins deux tiges de serrage (55) destinées à s'étendre chacune au travers d'un orifice de serrage (54) de la plaque de serrage supérieure (45) et au travers d'un orifice de serrage (54) correspondant de la plaque de serrage inférieure (46) pour permettre l'assemblage entre elles des plaques de serrage supérieure (45) et inférieure (46),
- des moyens de serrage (56, 57, 58) au niveau de chaque orifice de serrage (54) des plaques de serrage supérieure (45) et inférieure (46) destinés à coopérer avec lesdites au moins deux tiges de serrage (55) pour permettre l'assemblage entre elles des plaques de serrage supérieure (45) et inférieure (46),
**caractérisé en ce qu'**il comporte un système d'échange thermique (40) formé au moins en partie par au moins deux tiges de serrage (55) creuses du système de serrage (60) à l'intérieur desquelles circulent des gaz ou liquides à surchauffer, destinés à l'entrée dans ledit empilement (20), ou un fluide caloporteur à préchauffer, destiné à une autre fonction que celle de l'entrée dans ledit empilement (20), et
**en ce que** lesdites au moins deux tiges de serrage (55) creuses comportent chacune un fluide caloporteur et une extrémité d'entrée (55a) du fluide caloporteur à préchauffer (FE) et une extrémité de sortie (55b) du fluide caloporteur préchauffé (FS), et/ou **en ce que** le système d'échange thermique (40) est un système de surchauffe (40) des gaz en entrée de l'empilement (20) à oxydes solides de type SOEC/SOFC, formé au moins en partie par au moins deux tiges de serrage (55) creuses du système de serrage (60), comportant chacune les gaz ou liquides à surchauffer (GE) et une extrémité d'entrée (55a) et une extrémité de sortie (55b), à l'intérieur desquelles circulent lesdits gaz ou liquides à surchauffer (GE), l'ensemble (80) comportant un conduit d'entrée (90) dans l'empilement (20) relié fluidiquement à l'extrémité de sortie (55b) d'au moins une tige de serrage (55) creuse.

2. Ensemble selon la revendication 1, **caractérisé en ce que** lesdites au moins deux tiges de serrage (55) creuses comportent chacune une extrémité d'entrée (55a) d'un fluide caloporteur à préchauffer (FE) et une extrémité de sortie (55b) du fluide caloporteur préchauffé (FS).

3. Ensemble selon la revendication 2, **caractérisé en ce que**, au niveau de chacune des extrémités d'entrée (55a) et de sortie (55b) de chaque tige de serrage (55), le système de serrage (60) comporte un tube de transmission d'effort (70), disposé autour de l'extrémité (55a, 55b) correspondante de la tige de serrage (55), et des moyens de serrage (58), notamment une rondelle de serrage (58), le tube de transmission d'effort (70) étant positionné entre la rondelle de serrage (58) et la plaque de serrage (45, 46) correspondante.

4. Ensemble selon la revendication 2, **caractérisé en ce que**, au niveau de chacune des extrémités d'entrée (55a) et de sortie (55b) de chaque tige de serrage (55), le système de serrage (60) comporte une pièce d'isolation thermique (120), notamment en céramique, disposée autour de l'extrémité (55a, 55b) correspondante de la tige de serrage (55), la pièce d'isolation thermique (120) étant positionnée au contact de la plaque de serrage (45, 46) correspondante.

5. Ensemble selon la revendication 1, **caractérisé en ce que** le système d'échange thermique (40) est un système de surchauffe (40) des gaz en entrée de l'empilement (20) à oxydes solides de type SOEC/SOFC, formé au moins en partie par au moins deux tiges de serrage (55) creuses du système de serrage (60) à l'intérieur desquelles circule les gaz ou liquides à surchauffer (GE), l'ensemble (80) comportant un conduit d'entrée (90) dans l'empilement (20) relié fluidiquement à au moins une tige de serrage (55) creuse.

6. Ensemble selon la revendication 5, **caractérisé en ce que** le système de surchauffe (40) est dit de montage simple, comportant un conduit de liaison de montage simple (91) reliant fluidiquement le conduit d'entrée (90) et une extrémité (55b) d'une tige de serrage creuse (55), l'autre extrémité (55a) de la tige de serrage creuse (55) étant reliée fluidiquement à un conduit d'arrivée (99) de gaz à surchauffer (GE).

7. Ensemble selon la revendication 5, **caractérisé en ce que** le système de surchauffe (40) est dit de montage en série, comportant un ensemble de conduits de montage en série (92a, 92b), comprenant un premier conduit de liaison de montage en série (92a), reliant fluidiquement une première extrémité (55a') d'une première tige de serrage creuse (55') à une première extrémité (55a) d'une deuxième tige de serrage creuse (55), et un deuxième conduit de liaison de montage en série (92b) reliant fluidiquement la deuxième extrémité (55b') de la première tige de serrage (55') au conduit d'entrée (90) dans l'empilement (20), la deuxième extrémité (55b) de la deuxième tige de serrage creuse (55) étant reliée fluidiquement à un conduit d'entrée (99) de gaz à surchauffer (GE).

8. Ensemble selon la revendication 5, **caractérisé en ce que** le système de surchauffe (40) est dit de montage en parallèle, comportant un ensemble de conduits de montage en parallèle (93a, 93b, 93c), comprenant un premier conduit de liaison de montage en parallèle (93a), reliant fluidiquement une première extrémité (55a') d'une première tige de serrage creuse (55') à une première extrémité (55a) d'une deuxième tige de serrage creuse (55), et un deuxième conduit de liaison de montage en parallèle (93b) reliant fluidiquement la deuxième extrémité (55b') de la première tige de serrage (55') à la deuxième extrémité (55b) de la deuxième tige de serrage creuse (55), le deuxième conduit de liaison de montage en parallèle (93b) étant relié fluidiquement au conduit d'entrée (90) dans l'empilement (20), notamment par le biais d'un conduit de connexion (93c) lui-même relié fluidiquement au conduit d'entrée (90) dans l'empilement (20), le premier conduit de liaison de montage en parallèle (93a) étant relié fluidiquement à un conduit d'entrée (99) de gaz à surchauffer (GE).

9. Ensemble selon l'une quelconque des revendications précédentes, **caractérisé en ce que** lesdites au moins deux tiges de serrage creuses (55) comportent des moyens de vrillage (98) pour augmenter l'échange thermique avec le fluide à surchauffer ou à préchauffer.

10. Ensemble selon l'une quelconque des revendications 5 à 9, **caractérisé en ce que** le système de serrage (60) comporte, au niveau de chaque extrémité (55a, 55b, 55a', 55b') d'une tige de serrage creuse (55), des moyens de serrage (58), notamment une rondelle de serrage (58), au contact d'une plaque de serrage (45, 46).

11. Ensemble selon l'une quelconque des revendications 5 à 10, **caractérisé en ce que** les connexions fluidiques entre conduits fluidiques (91, 92a, 92b, 93a, 93b, 93c, 90, 99) et/ou entre conduits fluidiques (91, 92a, 92b, 93a, 93b, 93c, 90, 99) et tiges de serrage creuses (55, 55'), sont réalisées par le biais d'un ou plusieurs raccords démontables et étanches (95).

12. Procédé de fabrication d'au moins un système d'échange thermique (40), notamment un système de surchauffe (40) de gaz (GE) en entrée d'un empilement (20) à oxydes solides de type SOEC/SOFC ou un système de préchauffe (40) d'un fluide caloporteur, d'un ensemble (80) selon l'une quelconque des revendications précédentes, **caractérisé en ce qu'**il comporte l'étape consistant à former plusieurs tiges de serrage creuses (55) et à relier fluidiquement un ou plusieurs conduits fluidiques (91, 92a, 92b, 93a, 93b, 93c, 90, 99) avec les tiges de serrage creuses (55) de sorte à permettre une circulation d'un fluide à l'intérieur des tiges de serrage creuses (55).

## Patentansprüche

1. Anordnung (80), umfassend:
- einen Stapel (20) aus Festoxiden vom Typ SOEC/SOFC, die bei hoher Temperatur funktionieren, umfassend:
- eine Mehrzahl von elektrochemischen Zellen (41), die jeweils mit einer Kathode, mit einer Anode und mit einem Elektrolyt gebildet sind, der zwischen der Kathode und der Anode eingefügt ist, und eine Mehrzahl von Zwischenverbindern (42), die jeweils zwischen zwei benachbarten elektrochemischen Zellen (41) angeordnet sind,
- eine obere Endplatte (43) und eine untere Endplatte (44), zwischen denen die Mehrzahl von elektrochemischen Zellen (41) und die Mehrzahl von Zwischenverbindern (42) eingespannt sind,
- ein System (60) zum Spannen des Stapels (20) aus Festoxiden vom Typ SOEC/SOFC, umfassend eine obere Spannplatte (45) und eine untere Spannplatte (46), zwischen denen der Stapel (20) aus Festoxiden vom Typ SOEC/SOFC eingespannt ist, wobei jede Spannplatte (45, 46) wenigstens zwei Spannöffnungen (54) umfasst, wobei das Spannsystem (60) ferner umfasst:
- wenigstens zwei Spannstangen (55), die dazu ausgelegt sind, sich jeweils durch eine Spannöffnung (54) der oberen Spannplatte (45) hindurch und durch eine entsprechende Spannöffnung (54) der unteren Spannplatte (46) hindurch zu erstrecken, um den Zusammenbau der oberen (45) und der unteren (46) Spannplatte miteinander zu ermöglichen,
- Spannmittel (56, 57, 58) im Bereich jeder Spannöffnung (54) der oberen (45) und der unteren (46) Spannplatte, die dazu ausgelegt sind, mit den wenigstens zwei Spannstangen (55) zusammen zu wirken, um den Zusammenbau der oberen (45) und der unteren (46) Spannplatte miteinander zu ermöglichen,
**dadurch gekennzeichnet, dass** sie ein Wärmetauschsystem (40) umfasst, das wenigstens teilweise durch wenigstens zwei hohle Spannstangen (55) des Spannsystems (60) gebildet ist, in deren Inneren zu überhitzende Gase oder Flüssigkeiten zirkulieren, die bestimmt sind für den Eintritt in den Stapel (20), oder ein vorzuheizendes Wärmeträgerfluid, das bestimmt ist für eine andere Funktion als jene des Eintritts in den Stapel (20), und
dass die wenigstens zwei hohlen Spannstangen (55) jeweils ein Wärmeträgerfluid und ein Eintrittsende (55a) für das vorzuheizende Wärmeträgerfluid (FE) und ein Austrittsende (55b) für das vorgeheizte Wärmeträgerfluid (FS) umfassen, und/oder dass das Wärmetauschsystem (40) ein Überhitzungssystem (40) für Gase am Eintritt des Stapels (20) aus Festoxiden vom Typ SOEC/SOFC ist, das wenigstens teilweise durch wenigstens zwei hohle Spannstangen (55) des Spannsystems (60) gebildet ist, die jeweils die zu überhitzenden Gase oder Flüssigkeiten (GE) und ein Eintrittsende (55a) und ein Austrittsende (55b) umfassen, in deren Inneren die zu überhitzenden Gase oder Flüssigkeiten (GE) zirkulieren, wobei die Anordnung (80) eine Eintrittsleitung (90) in den Stapel (20) umfasst, die fluidisch mit dem Austrittsende (55b) wenigstens einer hohlen Spannstange (55) verbunden ist.

2. Anordnung nach Anspruch 1, **dadurch gekennzeichnet, dass** die wenigstens zwei hohlen Spannstangen (55) jeweils ein Eintrittsende (55a) für ein vorzuheizendes Wärmeträgerfluid (FE) und ein Austrittende (55b) für das vorgeheizte Wärmeträgerfluid (FS) umfassen.

3. Anordnung nach Anspruch 2, **dadurch gekennzeichnet, dass** das Spannsystem (60) im Bereich von jedem der Eintrittsenden (55a) und Austrittsenden (55b) jeder Spannstange (55) ein Kraftübertragungsrohr (70) umfasst, das um das entsprechende Ende (55a, 55b) der Spannstange (55) herum angeordnet ist, sowie Spannmittel (58), insbesondere eine Spannscheibe (58), wobei das Kraftübertragungsrohr (70) zwischen der Spannscheibe (58) und der entsprechenden Spannplatte (45, 46) positioniert ist.

4. Anordnung nach Anspruch 2, **dadurch gekennzeichnet, dass** das Spannsystem (60) im Bereich jedes von den Eintrittsenden (55a) und Austrittsenden (55b) jeder Spannstange (55) ein Wärmeisolationselement (120) umfasst, insbesondere aus Keramik, das um das entsprechende Ende (55a, 55b) der Spannstange (55) herum angeordnet ist, wobei das Wärmeisolationselement (120) in Kontakt mit der entsprechenden Spannplatte (45, 46) positioniert ist.

5. Anordnung nach Anspruch 1, **dadurch gekennzeichnet, dass** das Wärmetauschsystem (40) ein Überhitzungssystem (40) für Gase am Eintritt des Stapels (20) aus Festoxiden vom Typ SOEC/SOFC ist, das wenigstens teilweise durch wenigstens zwei hohle Spannstangen (55) des Spannsystems (60) gebildet ist, in deren Inneren die zu überhitzenden Gase oder Flüssigkeiten (GE) zirkulieren, wobei die Anordnung (80) eine Eintrittsleitung (90) in den Stapel (20) umfasst, die fluidisch mit wenigstens einer hohlen Spannstange (55) verbunden ist.

6. Anordnung nach Anspruch 5, **dadurch gekennzeichnet, dass** das Überhitzungssystem (40) von sogenannter Einfachmontage ist, umfassend eine Einfachmontageverbindungsleitung (91), die die Eintrittsleitung (90) und ein Ende (55b) einer hohlen Spannstange (55) fluidisch verbindet, wobei das andere Ende (55a) der hohlen Spannstange (55) fluidisch mit einer Ankunftsleitung (99) von zu überhitzendem Gas (GE) verbunden ist.

7. Anordnung nach Anspruch 5, **dadurch gekennzeichnet, dass** das Überhitzungssystem (40) von sogenannter Reihenmontage ist, umfassend eine Anordnung von Reihenmontageleitungen (92a, 92b), umfassend eine erste Reihenmontageverbindungsleitung (92a), die ein erstes Ende (55a') einer ersten hohlen Spannstange (55') fluidisch mit einem ersten Ende (55a) einer zweiten hohlen Spannstange (55) verbindet, und eine zweite Reihenmontageverbindungsleitung (92b), die das zweite Ende (55b') der ersten Spannstange (55') fluidisch mit der Eintrittsleitung (90) in den Stapel (20) verbindet, wobei das zweite Ende (55b) der zweiten hohlen Spannstange (55) fluidisch mit einer Eintrittsleitung (99) für zu überhitzende Gase (GE) verbunden ist.

8. Anordnung nach Anspruch 5, **dadurch gekennzeichnet, dass** das Überhitzungssystem (40) von sogenannter Parallelmontage ist, umfassend eine Anordnung von Parallelmontageleitungen (93a, 93b, 93c), umfassend eine erste Parallelmontageverbindungsleitung (93a), die ein erstes Ende (55a') einer ersten hohlen Spannstange (55') fluidisch mit einem ersten Ende (55a) einer zweiten hohlen Spannstange (55) verbindet, und eine zweite Parallelmontageverbindungsleitung (93b), die das zweite Ende (55b') der ersten Spannstange (55) fluidisch mit dem zweiten Ende (55b) der zweiten hohlen Spannstange (55) verbindet, wobei die zweite Parallelmontageverbindungsleitung (93b) fluidisch mit der Eintrittsleitung (90) in den Stapel (20) verbunden ist, insbesondere mittels einer Anschlussleitung (93c), die selbst wiederum fluidisch mit der Eintrittsleitung (90) in den Stapel (20) verbunden ist, wobei die erste Parallelmontageverbindungsleitung (93a) fluidisch mit einer Eintrittsleitung (99) für zu überhitzende Gase (GE) verbunden ist.

9. Anordnung nach einem der vorhergehenden Ansprüche, **dadurch gekennzeichnet, dass** die wenigstens zwei hohlen Spannstangen (55) Kräuselungsmittel (98) umfassen, um den Wärmetausch mit dem zu überhitzenden oder vorzuheizenden Fluid zu vergrößern.

10. Anordnung nach einem der Ansprüche 5 bis 9, **dadurch gekennzeichnet, dass** das Spannsystem (60) im Bereich jedes Endes (55a, 55b, 55a', 55b') einer hohlen Spannstange (55) Spannmittel (58), insbesondere eine Spannscheibe (58) in Kontakt mit einer Spannplatte (45, 46) umfasst.

11. Anordnung nach einem der Ansprüche 5 bis 10, **dadurch gekennzeichnet, dass** die fluidischen Anschlüsse zwischen fluidischen Leitungen (91, 92a, 92b, 93a, 93b, 93c, 90, 99) und/oder zwischen fluidischen Leitungen (91, 92a, 92b, 93a, 93b, 93c, 90, 99) und hohlen Spannstangen (55, 55') mittels eines oder mehrerer demontierbarer und dichter Anschlüsse (95) realisiert sind.

12. Verfahren zur Herstellung wenigstens eines Wärmetauschsystems (40), insbesondere eines Überhitzungssystems (40) für Gase (GE) am Eintritt eines Stapels (20) aus Festoxiden von Typ SOEC/SOFC oder eines Vorheizsystems (40) für ein Wärmeträgerfluid, einer Anordnung (80) nach einem der vorhergehenden Ansprüche, **dadurch gekennzeichnet, dass** es den Schritt umfasst, der darin besteht, mehrere hohle Spannstangen (55) zu bilden, und eine oder mehrere fluidische Leitungen (91, 92a, 92b, 93a, 93b, 93c, 90, 99) fluidisch mit den hohlen Spannstangen (55) derart zu verbinden, dass eine Zirkulation eines Fluids im Inneren der hohlen Spannstangen (55) ermöglicht wird.

## Claims

1. Assembly (80), comprising:
- a solid-oxide stack (20) of the SOEC/SOFC type functioning at high temperature, comprising:
- a plurality of electrochemical cells (41) each formed by a cathode, an anode and an electrolyte interposed between the cathode and the anode, and a plurality of intermediate interconnectors (42) each arranged between two adjacent electrochemical cells (41),
- a top end plate (43) and a bottom end plate (44), between which the plurality of electrochemical cells (41) and the plurality of intermediate interconnectors (42) are gripped,
- a system (60) for gripping the solid-oxide stack (20) of the SOEC/SOFC type, comprising a top clamping plate (45) and a bottom clamping plate (46), between which the solid-oxide stack (20) of the SOEC/SOFC type is gripped, each clamping plate (45, 46) comprising at least two clamping orifices (54), the clamping system (60) further comprising:
- at least two clamping rods (55) intended each to extend through a clamping orifice (54) in the top clamping plate (45) and through a corresponding clamping orifice (54) in the bottom clamping plate (46) to enable the top (45) and bottom (46) clamping plates to be assembled together,
- clamping means (56, 57, 58) at each clamping orifice (54) of the top (45) and bottom (46) clamping plates intended to cooperate with said at least two clamping rods (55) in order to enable the top (45) and bottom (46) clamping plates to be assembled together,
**characterized in that** it comprises a heat exchange system (40) formed at least partly by at least two hollow clamping rods (55) of the clamping system (60) inside which gases or liquids to be superheated circulate, intended to enter said stack (20), or a heat-transfer fluid to be preheated circulates, intended to another function than entering said stack (20), and
**in that** said at least two hollow clamping rods (55) each comprise a heat-transfer fluid and an inlet end (55a) for the heat-transfer fluid (FE) to be preheated and an outlet end (55b) for the preheated heat-transfer fluid (FS), and/or **in that** the heat exchange system (40) is a system (40) for superheating the gases at the inlet of the solid-oxide stack (20) of the SOEC/SOFC type, formed at least partly by at least two hollow clamping rods (55) of the clamping system (60), each comprising said gases or liquids to be superheated (GE) and an inlet end (55a) and an outlet end (55b), inside which said gases or liquids (GE) to be superheated circulate, the assembly (80) comprising an inlet pipe (90) into the stack (20) fluidically connected to the outlet end (55b) of at least one hollow clamping rod (55).

2. Assembly according to claim 1, **characterized in that** said at least two hollow clamping rods (55) each comprise an end (55a) for the entry of a heat-transfer fluid (FE) to be preheated and an end (55b) for exit of the preheated heat transfer fluid (FS).

3. Assembly according to claim 2, **characterized in that**, at each of the inlet (55a) and outlet (55b) ends of each clamping rod (55), the clamping system (60) comprises a force transmission tube (70), disposed around the corresponding end (55a, 55b) of the clamping rod (55), and clamping means (58), in particular a clamping washer (58), the force transmission tube (70) being positioned between the clamping washer (58) and the corresponding clamping plate (45, 46).

4. Assembly according to claim 2, **characterized in that**, at each of the inlet (55a) and outlet (55b) ends of each clamping rod (55), the clamping system (60) comprises a thermal-insulation part (120), in particular made from ceramic, disposed around the corresponding end (55a, 55b) of the clamping rod (55), the thermal-insulation part (120) being positioned in contact with the corresponding clamping plate (45, 46).

5. Assembly according to claim 1, **characterized in that** the heat exchange system (40) is a system (40) for superheating the gases at the inlet of the solid-oxide stack (20) of the SOEC/SOFC type, formed at least partly by at least two hollow clamping rods (55) of the clamping system (60) inside which the gases or liquids (GE) to be superheated circulate, the assembly (80) comprising a pipe (90) for entering the stack fluidically connected to at least one hollow clamping rod (55).

6. Assembly according to claim 5, **characterized in that** the superheating system (40) is of so-called simple mounting, comprising a simple-mounting connection pipe (91) fluidically connecting the inlet pipe (90) and one end (55b) of a hollow clamping rod (55), the other end (55a) of the hollow clamping rod (55) being fluidically connected to a pipe (99) for supplying gas (GE) to be superheated.

7. Assembly according to claim 5, **characterized in that** the superheating system (40) is of so-called mounting in series, comprising a set of pipes (92a, 92b) for mounting in series, comprising a first pipe (92a) for mounting-in-series connection, fluidically connecting a first end (55a') of a first hollow clamping rod (55') to a first end (55a) of a second hollow clamping rod (55), and a second pipe (92b) for mounting-in-series connection fluidically connecting the second end (55b') of the first clamping rod (55') to the pipe (90) for entering the stack (20), the second end (55b) of the second hollow clamping rod (55) being fluidically connected to a pipe (99) for the entry of gas (GE) to be superheated.

8. Assembly according to claim 5, **characterized in that** the superheating system (40) is of the so-called parallel mounting type, comprising a set of parallel-mounting pipes (93a, 93b, 93c), comprising a first parallel-mounting connection pipe (93a) fluidically connecting a first end (55a') of a first hollow clamping rod (55') to a first end (55a) of a second hollow clamping rod (55), and a second parallel-mounting connection pipe (93b) fluidically connecting the second end (55b') of the first clamping rod (55') to the second end (55b) of the second hollow clamping rod (55), the second parallel-mounting connection pipe (93b) being fluidically connected to the pipe (90) for entering the stack (20), in particular by means of a connection pipe (93c) itself fluidically connected to the pipe (90) for entering the stack (20), the first parallel-mounting connection pipe (93a) being fluidically connected to a pipe (99) for the entry of gas (GE) to be superheated.

9. Assembly according to any of the preceding claims, **characterized in that** said at least two hollow clamping rods (55) comprise swirl means (98), for increasing the heat exchange with the fluid to be superheated or preheated.

10. Assembly according to any of claims 5 to 9, **characterized in that** the clamping system (60) comprises, at each end (55a, 55b, 55a', 55b') of a hollow clamping rod (55), clamping means (58), in particular a clamping washer (58), in contact with a clamping plate (45, 46).

11. Assembly according to any of claims 5 to 10, **characterized in that** the fluid connections between fluid pipes (91, 92a, 92b, 93a, 93b, 93c, 90, 99) and/or between fluid pipes (91, 92a, 92b, 93a, 93b, 93c, 90, 99) and hollow clamping rods (55, 55'), are produced by means of one or more demountable fluidtight couplings (95).

12. Method for manufacturing at least one heat exchange system (40), in particular a system (40) for superheating gases (GE) at the inlet of a solid-oxide stack (20) of the SOEC/SOFC type or a system (40) for preheating a heat-transfer fluid, of an assembly (80) according to any of the preceding claims, **characterized in that** it comprises the step consisting of forming a plurality of hollow clamping rods (55) and fluidically connecting one or more fluid pipes (91, 92a, 92b, 93a, 93b, 93c, 90, 99) with the hollow clamping rods (55) so as to allow circulation of a fluid inside the hollow clamping rods (55).
